# EUROPEAN PATENT APPLICATION

(11) **EP 3 964 308 A1**
(43) Date of publication of application: **09.03.2022**
(21) Application number: 21193769.3
(22) Date of filing: 30.08.2021
(51) Int. Cl.: B22F 3/15, B22F 5/04, B23P 15/02, B33Y 10/00, B33Y 40/20, B33Y 80/00, C22C 19/07

(54) **METHOD FOR MANUFACTURING COBALT-BASED ALLOY STRUCTURE, AND COBALT-BASED ALLOY STRUCTURE OBTAINED THEREBY**

(30) Priority: 02.09.2020 JP 2020147377; 25.08.2021 JP 2021136907
(71) Applicant: Mitsubishi Power, Ltd., Nishi-ku, Yokohama-shi Kanagawa 220-8401 (JP)
(72) Inventor: AKIYAMA, Yasuhiro, Yokohama-shi, Kanagawa, 220-8401 (JP); SHIBAYAMA, Takashi, Yokohama-shi, Kanagawa, 220-8401 (JP); IMANO, Shinya, Yokohama-shi, Kanagawa, 220-8401 (JP)
(74) Representative: Strehl Schübel-Hopf & Partner

(57) **Abstract**

In order to stably produce a structured article made of a metal with a complex shape, such as a turbine stator blade, while securing a sufficient mechanical strength, there is provided a method for manufacturing a cobalt-based alloy structure, the cobalt-based alloy structure including a first structure region comprising a hollow space and a second structure region filled in the hollow space. The method includes the steps of: forming the first structure region by additive manufacturing from a first cobalt-based alloy powder having a particle size distribution within a range of 5-85 µm and in D90 within a range of 40-80 µm; and forming the second structure region in the hollow space by hot isostatic pressing, the hollow space being filled with a second cobalt-based alloy powder with a particle size distribution within a range of 5-85 µm and in D90 within a range of 40-80 µm.

## Description

### FIELD OF THE INVENTION

The present invention relates to a method for manufacturing a cobalt-based alloy structure, and the cobalt-based alloy structure obtained by the method.

### DESCRIPTION OF RELATED ART

There is much attention to methods for manufacturing alloy structures (e.g. turbine stator blades) using high-strength heat-resistant alloys by hot isostatic pressing (HIP).

In HIP, capsules formed for HIP are filled with metal powder and are deformed at high temperature and high pressure while subjecting the metal powder to heat treatment.

Such capsules for HIP are generally produced by processes such as machining and coating, which makes it difficult to give them complex shapes.

Therefore, various methods are under consideration for producing alloy structures by HIP such that the capsules for HIP with more complex shapes are produced by an additive manufacturing (AM) method using metal powder and are filled with metal powder. For example, Japanese Patent Application Publication No. 2017-519106 (JP 2017-519106 A, corresponding to WO 2015/181080 A1) discloses a method for producing a turbomachine component.

JP 2017-519106 A (WO 2015/181080 A1) teaches a method for producing a turbomachine component, comprising the following steps: (a) producing by additive manufacturing a plurality of separate segments of the turbomachine component, at least some of the separate segments having a skin surrounding at least one empty volume corresponding to a massive part of the turbomachine component; (b) assembling the separate segments of the turbomachine component together forming a semi-finished component, the empty volumes of the segments forming at least one inner cavity in the semi-finished component; (c) filling the at least one inner cavity of the semi-finished component with a bulk flowable material; (d) sealingly closing the at least one inner cavity filled with bulk flowable material; and (e) densifying and solidifying the bulk flowable material in the at least one inner cavity. Furthermore, JP 2017-519106 A (WO 2015/181080 A1) teaches that: the segments of the turbomachine component are manufactured with a first powder material; the bulk flowable material is a second powder material; and the second powder material is different form the first powder material.

In the description below, the above-described skin of the separate segment is referred to as "additively manufactured portion, AM portion", and a portion obtained by HIP densifying and solidifying the second powder material filled into the inner cavity is referred to as "HIP-treated portion".

In the method disclosed in JP 2017-519106 A (WO 2015/181080 A1), the first powder material is a nickel-based superalloy powder or a titanium alloy powder, and the second powder material is a powder of one selected from the group consisting of stainless steel, carbon steel, nickel-based superalloy, titanium alloy, and aluminum alloy. Also, the first powder material has an average grain size between 10 and 48 µm, while the second powder material has an average grain size between 50 and 100 µm.

That is, the first powder material and the second powder material are different in chemical composition and average grain size. This results in inhomogeneity between the metallographic structure of the AM portion and that of the HIP-treated portion after the heat treatment in HIP, causing a boundary to appear between the metallographic structure of the AM portion and that of the HIP-treated portion. Such a boundary is prone to be the origin of fracture. In other words, the AM portion and the HIP-treated portion easily become detached from each other due to brittle fracture. This means that the method disclosed in JP 2017-519106 A (WO 2015/181080 A1) might fail to provide a separate segment with a sufficient mechanical strength in a stable manner.

### SUMMARY OF THE INVENTION

The present disclosure has been made in view of the above, and it is an objective to stably produce a structured article made of a metal with a complex shape, such as a turbine stator blade, while securing a sufficient mechanical strength.

To achieve the above objective, a first aspect of the present disclosure provides a method for manufacturing a cobalt-based alloy structure. The cobalt-based alloy structure includes a first structure region including a hollow space and a second structure region filled in the hollow space. The method includes the steps of forming the first structure region by additive manufacturing from a first cobalt-based alloy powder having a particle size distribution within a range from 5 to 85 µm and a volumetric basis 90% diameter within a range from 40 to 80 µm; and forming the second structure region in the hollow space of the first structure region by HIP with the hollow space of the first structure region filled with a second cobalt-based alloy powder having a particle size distribution within a range from 5 to 85 µm and a volumetric basis 90% diameter within a range from 40 to 80 µm.

In the present disclosure, the particle size of powder is measured with a laser diffraction/scattering particle size distribution analyzer. The volumetric basis 90% diameter (also referred to 90 volume % diameter and D90) is the particle size when the cumulative value reaches 90% when the volume fraction of each particle size is accumulated from the one with the smallest particle size.

According to the first aspect, application of additive manufacturing makes it relatively easy to form the first structure region even when the first structure has a complex shape. Also, a cobalt-based alloy powder having a particle size distribution within a range from 5 to 85 µm and a 90 volume % diameter (D90) within a range from 40 to 80 µm is used in both the step of forming the first structure region by additive manufacturing and the step of forming the second structure region by HIP. In other words, the first alloy powder used to form the first structure region and the second alloy powder used to form the second structure region have the major chemical composition and particle size in common. This means that the metallographic structure of the first structure region and that of the second structure region tend to be homogeneous after the heat treatment is performed by HIP, which makes it unlikely for a boundary to appear between them.

As a result, brittle fracture originating in the boundary between the first and the second structure regions is unlikely to occur, which maintains the integrity between the first and the second structure regions. This ensures that the cobalt-based alloy structure produced by the method according to the first aspect of the present disclosure not only has characteristics of cobalt-based alloys (e.g., corrosion resistance and abrasion resistance) but also surely has a sufficient mechanical strength. As such, according to the first aspect of the present disclosure, there can be stably produced a cobalt-based alloy structure with a complex shape while securing a sufficient mechanical strength.

In a second aspect of the present disclosure, the first and the second cobalt-based alloy powder according to the first aspect includes: 0.08 mass % or more and 0.25 mass % or less of carbon (C); 0.1 mass % or less of boron (B); 10 mass % or more and 30 mass % or less of chromium (Cr); 5 mass % or less of iron (Fe); and 30 mass % or less of nickel (Ni). The total content of the Fe and the Ni is 30 mass % or less. The cobalt-based alloy powder also includes: at least one of tungsten (W) and molybdenum (Mo), the total content of the W and the Mo being 5 mass % or more and 12 mass % or less; at least one of titanium (Ti), zirconium (Zr), niobium (Nb), tantalum (Ta), hafnium (Hf), and vanadium (V), the total content of the Ti, the Zr, the Nb, the Ta, the Hf, and the V being 0.5 mass % or more and 2 mass % or less; 0.5 mass % or less of silicon (Si); 0.5 mass % or less of manganese (Mn); 0.003 mass % or more and 0.1 mass % or less of nitrogen (N); and the balance being cobalt (Co) and impurities.

According to the second aspect, the use of a Co-based alloy powder with the above-described chemical composition allows carbide phase particles, which contribute to precipitation strengthening, to precipitate dispersedly in the matrix crystal grains. This further enhances the mechanical properties of the Co-based alloy.

In a third aspect of the present disclosure, the manufacturing method according to the first or the second aspects further includes the step of recycling the first cobalt-based alloy powder, in which the step of recycling the first cobalt-based alloy powder includes the substeps of: collecting the first cobalt-based alloy powder unused in the step of forming the first structure region; and classifying the first cobalt-based alloy powder collected into the particle size defined in the first aspect. In addition, the second cobalt-based alloy powder includes the first cobalt-based alloy powder recycled in the step of recycling the first cobalt-based alloy powder.

When the first structural part is formed by an AM method of a powder bed melting manner, powder is laid and spread on a modeling table to form a powder bed, a predetermined area of the powder bed is irradiated with a heat source such as a laser beam to locally melt and solidify the powder, and thus an AM body with a desired shape is formed. In this AM method, most of the powder that is not irradiated with the heat source is unused, and not all the powder prepared in the previous step can be effectively used.

According to the third aspect, unused alloy powder that has not been irradiated with a heat source such as a laser beam when forming the first structurer portion is collected and recycled, enabling to utilize effectively. Because the collected alloy powder may be partially agglomerated, it is preferable to classify it using a sieve or the like to conform to the first disclosure and recycle it. The recycled alloy powder can be utilized as at least a part of the second Co-based alloy powder forming the second structure region. The recycled first Co-based alloy powder may constitute all the second Co-based alloy powder. Meanwhile, the third disclosure and advantageous effects thereof are not essential in the present disclosure but additional.

By using the recycled first Co-based alloy powder as the second Co-based alloy powder, the chemical composition and the particle size of the alloy powders become in common. Thus, it is possible to stably produce a Co-based alloy structure with a complicated shape while ensuring sufficient mechanical strength, as shown in the first disclosure.

A fourth aspect of the present disclosure provides a Co-based alloy structure produced by the method according to any one of the first to third aspects. A portion of the structure has a 0.2% proof stress at room temperature of 500 MPa or more and a tensile strength at 800°C of 300 MPa or more.

In a fifth aspect of the present disclosure, there is provided the Co-based alloy structure according to the fourth disclosure in which the structure is a turbine stator blade, and the portion of the structure is an outer ring side end wall.

According to the fourth and the fifth aspects, there can be provided the structure having a portion with superior mechanical properties. Also, the structure can be preferably used as a turbine stator blade of which the portion is an outer ring side end wall.

### ADVANTAGES OF THE INVENTION

According to the present disclosure, there can be stably manufactured a structured article made of a Co-based alloy with a complex shape while securing sufficient mechanical characteristics.

### BRIEF DESCRIPTION OF THE DRAWINGS

FIG. 1 is a schematic illustration showing a perspective view of a turbine stator blade of a turbine high-temperature component as an example of a Co-based alloy structure;
FIG. 2 is a schematic illustration showing a partial cross-sectional view of the turbine stator blade taken along the line II-II in FIG. 1;
FIG. 3 is a schematic illustration showing a partial longitudinal cross-sectional view of a first structure region;
FIG. 4 is a flow diagram showing an exemplary process of a method for manufacturing a Co-based alloy structure;
FIG. 5 is a schematic illustration showing a perspective view of a first structure region, in its entirety, to be applied for each of Sample A through Sample C;
FIG. 6 is a schematic illustration showing a cross-sectional view of the first structure region taken along the line VI-VI in FIG. 5;
FIG. 7 is a schematic illustration showing a cross-sectional view of the first structure region taken along the line VII-VII in FIG. 5;
FIG. 8 is an optical microscopy photograph showing the upper surface of Sample A;
FIG. 9 is a scanning electron microscopy photograph showing a metallographic structure of the portion X in FIG. 8;
FIG. 10 is another scanning electron microcopy photograph showing a metallographic structure in an area in the vicinity of the boundary between the first structure region and the second structure region in Sample A;
FIG. 11 is another scanning electron microscopy photograph showing a metallographic structure of Sample B;
FIG. 12 is another scanning electron microscopy photograph showing a metallographic structure in an area in the vicinity of the boundary between the first structure region and the second structure region in Sample B;
FIG. 13 is another scanning electron microscopy photograph showing a metallographic structure of Sample C; and
FIG. 14 is another scanning electron microscopy photograph showing a metallographic structure in an area in the vicinity of the boundary between the first structure region and the second structure region in Sample C.

### DETAILED DESCRIPTION OF THE PREFERRED EMBODIMENTS

Preferred embodiments of the present disclosure will be described in detail hereinafter with reference to the accompanying drawings. It should be understood, however, that the following description of the preferred embodiments is provided merely for illustration purposes and not to be construed as limiting the present disclosure, the applications thereof, or the uses thereof.

### [Basic Characteristics of Cobalt-based Alloy Structure]

Co-based alloys have a melting point about 50 to 100°C higher than generally used nickel-based alloys, and their substitutional elements have a diffusion coefficient smaller than the Ni group. As a result, they are more resistant to structural change during use at high temperature and more ductile than nickel-based alloys. These characteristics make it easier to perform plastic working, such as forging, rolling, and pressing, on Co-based alloys.

Co-based alloys exhibit the elastic modulus of 220 to 230 GPa, which is equal to or more than 10% larger than that of nickel-based alloys of 200 GPa. Also, in general Co-based alloys are hard and has excellent wear resistance and corrosion resistance.

### [Cobalt-based Alloy Structure]

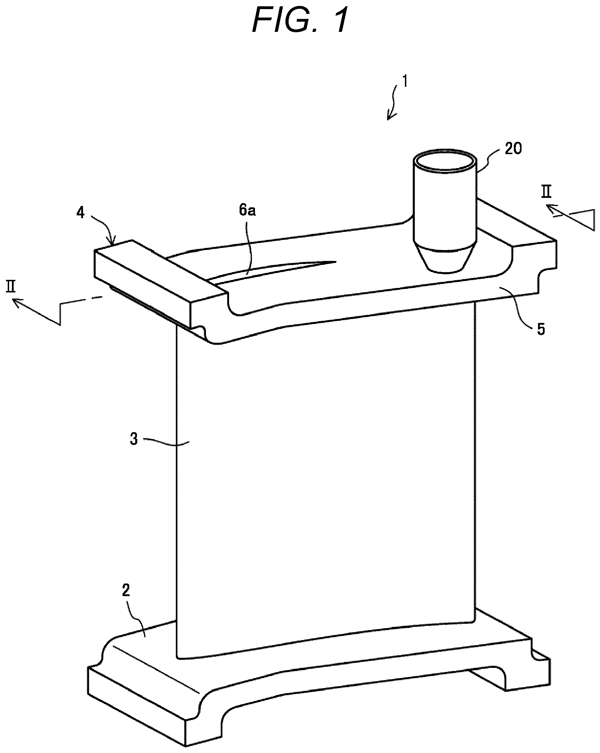

FIG. 1 is a schematic illustration showing a perspective view of a turbine stator blade of a turbine high-temperature component as an example of a Co-based alloy structure. As shown in FIG. 1, the turbine stator blade 1 consists roughly of an inner ring side end wall 2, an airfoil part 3, and an outer ring side end wall 4. Inside the airfoil part 3 is disposed an air passage (not shown). In a gas turbine for power generation with a 30 MW-class output power, for example, the airfoil part 3 is about 170 mm in length (distance between both end walls). The turbine high-temperature component above is not limited to gas turbine applications and may find other turbine applications (e.g., steam turbines).

The outer ring side end wall 4 is a Co-based alloy structure manufactured by the method according to an embodiment of the present disclosure. The configuration of the outer ring side end wall 4 will be specifically described hereinafter.

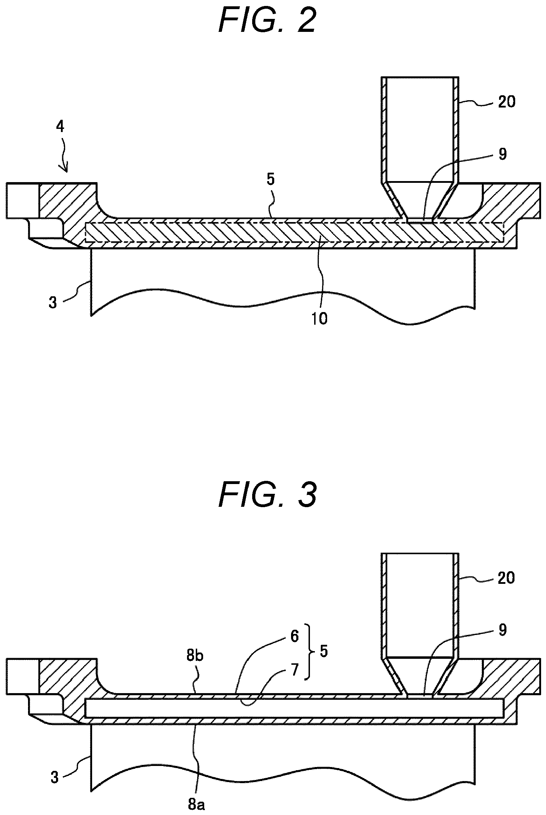

FIG. 2 is a schematic illustration showing a partial cross-sectional view of the turbine stator blade taken along the line II-II in FIG. 1. As shown in FIG. 2, the outer ring side end wall 4 includes a first structure region 5 and a second structure region 10.

### (First Structure Region)

The first structure region 5 is an additively manufactured article formed from a first Co-based alloy powder. In other words, it is manufactured by additive manufacturing. Additive manufacturing is a method for forming an article by selectively melting and solidifying a powder fabricated by, e.g., gas atomizing using an apparatus such as a 3D printer using, e.g., a laser as a heat source. The first Co-based alloy powder to be used in the step of forming the first structure region 5 (additive manufacturing step S2, which will be described later) is fabricated such that it has a particle size distribution within a range from 5 to 85 µm and in D90 within a range from 40 to 80 µm. The chemical composition of the first Co-based alloy powder will be also described later.

FIG. 3 is a schematic illustration showing a partial longitudinal cross-sectional view of the first structure region. As shown in FIG. 3, the first structure region 5 has a body 6 and a hollow space 7.

The body 6 has a capsular shape and includes an aperture 6a in communication with the air passage (not shown) of the airfoil part 3 (see FIG. 1).

Furthermore, the body 6 includes an opening 9, which is disposed in the position as shown in FIG. 3, on the right and near side of the sheet. The opening 9 is in communication with both hollow space 7 and a vacuum drawing port 20, which will be described later. And, the opening 9 will be sealed in a sealing step S4, which will be described later.

The hollow space 7, in the body 6, is disposed in the position as shown in FIG. 3, on the near side of the sheet. The hollow space 7 is substantially rectangular in a longitudinal cross-sectional view and configured such that its length in the lateral direction in FIG. 3 is about the same as the lateral width of the airfoil part 3.

### (Second Structure Region)

The second structure region 10 is a sintered body formed from a second Co-based alloy powder. Similarly to the first Co-based alloy powder, the second Co-based alloy powder also has the particle size distribution within a range from 5 to 85 µm and in D90 within a range from 40 to 80 µm. The chemical composition of the second Co-based alloy powder will be also described later. The second structure region 10 is formed by hot isostatic pressing (HIP).

Densified in an HIP treatment step S5, which will be described later, the second structure region 10 is buried in the hollow space 7 in the first structure region 5, as shown in FIG. 2. The Co-based alloy structure (outer ring side end wall 4) is configured such that the metallographic structure of the first structure region 5 and that of the second structure region 10, buried in the hollow space 7, are homogeneous and that no boundary appears between the first structure region 5 and the second structure region 10. In FIG. 2, for illustration purposes, the boundary between the first structure region 5 and the second structure region 10 is shown by a dashed line.

### (Vacuum Drawing Port)

As shown in FIGs. 1 to 3, the first structure region 5 includes the vacuum drawing port 20. The vacuum drawing port 20 is used mainly in a powder filling/deaeration step S3, which will be described later. In the present embodiment, the vacuum drawing port 20 is disposed in the position as shown in FIG. 3, on the right and near side of the sheet. The vacuum drawing port 20 is substantially cylindrical. Specifically, in each figure, it is configured to be substantially conical from the lower end portion to the intermediate portion and substantially cylindrical from the intermediate portion to the upper end portion. The vacuum drawing port 20 is formed integrally with the body 6 and a wall portion 8b at the lower end portion. The vacuum drawing port 20 is removed from the first structure region 5 after a surface treatment step S7, which will be described later.

### [Chemical Composition of Cobalt-based Alloy Powder]

Each of the first and the second Co-based alloy powders to be used in the method according to the embodiment of the present disclosure is a polycrystalline powder that consists of particles having the particle size distribution within a range from 5 to 85 µm and in D90 within a range from 40 to 80 µm. The chemical composition of the Co-based alloy powder will be described hereinafter.

### (C: 0.08 mass % or more and 0.25 mass % or less)

The C component is an important component that constitutes an MC type carbide phase (carbide phase of Ti, Zr, Hf, V, Nb and/or Ta) to serve as a precipitation strengthening phase. In the above-described MC type carbide phase, "M" means a transition metal and "C" means carbon. The content of the C component is preferably 0.08 mass % or more and 0.25 mass % or less, more preferably 0.1 or more and 0.2 mass % or less, and even more preferably 0.12 mass % or more and 0.18 mass % or less. When the C content is less than 0.08 mass %, the precipitation amount of the precipitation strengthening phase is insufficient, resulting in an insufficient effect of improving the mechanical properties. By contrast, when the C content is over 0.25 mass %, the alloy material becomes excessively hard, which leads to deterioration in ductility and toughness of a sintered body obtained by sintering the Co-based alloy.

### (B: 0.1 mass % or less)

The B component contributes to improving bondability between crystal grain boundaries (so-called grain boundary strengthening). Although the B is not an essential component, when it is contained in the alloy, the content of the B component is preferably 0.1 mass % or less and more preferably 0.005 mass % or more and 0.05 mass % or less. When the B component is over 0.1 mass%, cracking is prone to occur during sintering of the Co-based alloy and another heat treatment thereafter.

### (Cr: 10 mass % or more and 30 mass % or less)

The Cr component contributes to improving corrosion resistance and oxidation resistance. The content of the Cr component is preferably 10 mass % or more and 30 mass % or less, and more preferably 10 mass % or more and 25 mass % or less. In the case where a corrosion resistant coating layer is provided on the outermost surface of the Co-based alloy structure, the Cr content is even more preferably 10 mass % or more and 18 mass % or less. When the Cr content is less than 10 mass %, advantageous effects such as improvements of the corrosion resistance and the oxidation resistance are insufficient. When the Cr content is over 30 mass %, the brittle σ phase and/or the excessive amount of Cr carbide phases are generated, resulting in deteriorated mechanical properties (e.g. toughness, ductility, and strength). Meanwhile, in the present disclosure Cr carbide phase generation itself in the structure is not denied.

### (Ni: 30 mass % or less)

Being similar to the Co component in properties but less expensive than the Co, the Ni component may be used to replace part of the Co component. Although the Ni is not an essential component, when it is contained in the alloy, the content of the Ni component is preferably 30 mass % or less, more preferably 20 mass % or less, and even more preferably 5 mass % or more and 15 mass % or less. When the Ni content is over 30 mass %, the abrasion resistance and the local stress resistance, which are characteristics of Co based alloys, deteriorate. This is attributable to the difference in stacking fault energy between the Co and the Ni.

### (Fe: 5 mass % or less)

Being much less expensive than the Ni and similar to the Ni component in properties, the Fe component may be used to replace part of the Ni component. The total content of the Fe and Ni is preferably 30 mass % or less, more preferably 20 mass % or less, and even more preferably 5 mass % or more and 15 mass % or less. Although the Fe is not an essential component, when it is contained in the alloy, the content of the Fe component is preferably 5 mass % or less and more preferably 3 mass % or less in the range less than the Ni content. In contrast, when the Fe content is over 5 mass %, the corrosion resistance and the mechanical properties deteriorate.

### (W and/or Mo: 5 mass % or more and 12 mass % or less in total)

The W component and the Mo component contribute to solution-strengthening the matrix. The total content of the W component and/or the Mo component (at least one of the W and Mo components) is preferably 5 mass % or more and 12 mass % or less, and more preferably 7 mass % or more and 10 mass % or less. When the total content of the W and the Mo components is less than 5 mass %, the solution strengthening of the matrix is insufficient. In contrast, when the total content of the W and the Mo components is over 12 mass %, the brittle σ phase tends to be generated easily, resulting in deteriorated mechanical properties (e.g. toughness and ductility).

### (Re: 2 mass % or less)

The Re component contributes to solution-strengthening the matrix and improving corrosion resistance. Although the Re is not an essential component, when it is contained in the alloy to replace part of the W component or the Mo component, the content of the Re component is preferably 2 mass % or less, and more preferably 0.5 mass % or more and 1.5 mass % or less. When the Re content is over 2 mass %, the advantageous effects of the Re component become saturated, and the material costs become too high.

### (At least one of Ti, Zr, Nb, Ta, Hf, and V: 0.5 mass % or more and 2 mass % or less in total)

The Ti, the Zr, the Nb, the Ta, the Hf, and the V components are important components that constitute the reinforcing carbide phase (MC type carbide phase). The total content of at least one of the Ti, Zr, Nb, Ta, Hf, and V components is preferably 0.5 mass % or more and 2 mass % or less, and more preferably 0.5 mass % or more and 1.8 mass % or less. When the total content is less than 0.5 mass %, the precipitation amount of the reinforcing carbide phase is insufficient, and, as a result, the effect of improving the mechanical properties is insufficient. By contrast, when the total content is over 2 mass %, the mechanical properties deteriorate due to coarsening of the grains of the reinforcing carbide phase, accelerated generation of the brittle phase such as σ phase, generation of grains of an oxide phase that does not contribute to precipitation strengthening, etc.

Furthermore, in the viewpoints of dispersed precipitation of particles of the reinforcing carbide phase (suppression of coarsening of the reinforcing carbide phase particles), it is more preferable that two or more of the Ti, Zr, Nb, Ta, Hf, and V elements are contained in the alloy, even more preferably three or more, and still more preferably four or more.

More specifically, when the Ti component is included the Ti content is preferably 0.01 mass % or more and 1 mass % or less, and more preferably 0.05 mass % or more and 0.8 mass % or less.

When the Zr component is included, the Zr content is preferably 0.05 mass % or more and 1.5 mass % or less, and more preferably 0.1 mass % or more and 1.2 mass % or less. From the viewpoint of the mechanical strength, it is preferable that the Zr component is essential. In contrast, from the viewpoint of the toughness, it is preferable that the Zr component is not included.

When the Nb component is included, the Nb content is preferably 0.02 mass % or more and 1 mass % or less, and more preferably 0.05 mass % or more and 0.8 mass % or less.

When the Ta component is included, the Ta content is preferably 0.05 mass % or more and 1.5 mass % or less, and more preferably 0.1 mass % or more and 1.2 mass % or less.

When the Hf component is included, the Hf content is preferably 0.01 mass % or more and 0.5 mass % or less, and more preferably 0.02 mass % or more and 0.1 mass % or less.

When the V component is included, the V content is preferably 0.01 mass % or more and 0.5 mass % or less, and more preferably 0.02 mass % or more and 0.1 mass % or less.

### (Si: 0.5 mass % or less)

The Si component serves as a deoxidant agent and contributes to improving the mechanical properties. Although the Si is not an essential component, when it is contained in the alloy, the content of the Si component is preferably 0.5 mass % or less and more preferably 0.01 mass % or more and 0.3 mass % or less. When the Si content is over 0.5 mass %, coarse grains of an oxide (e.g. SiO₂) are generated, which causes deterioration of the mechanical properties.

### (Mn: 0.5 mass % or less)

The Mn component serves as a deoxidant agent and a desulfurizing agent and contributes to improving the mechanical properties and the corrosion resistance. Although the Mn is not an essential component, when it is contained in the alloy, the content of the Mn component is preferably 0.5 mass % or less and more preferably 0.01 mass % or more and 0.3 mass % or less. When the Mn content is over 0.5 mass %, coarse grains of a sulfide (e.g. MnS) are generated, which causes deterioration of the mechanical properties and the corrosion resistance.

### (N: 0.003 mass % or more and 0.1 mass % or less)

The N component contributes to gas atomization in fabricating the Co-based alloy powder. The N component varies in content depending on the atmosphere in which the gas atomization is performed. The content of the N component decreases when the gas atomization is performed in an argon (Ar) gas atmosphere (N: 0.003 mass % or more and 0.04 mass % or less), and it increases when the gas atomization is performed in a N gas atmosphere (N: more than 0.04 mass % and 0.1 mass % or less).

The N component contributes to stable formation of the reinforcing carbide phase. When the N content is less than 0.003 mass %, such an advantageous effect is not obtained sufficiently. In contrast, when the N content is over 0.1 mass %, coarse grains of a nitride (e.g. chromium nitride) are formed, which results in poor mechanical properties.

### (Balance: Co component and Impurities)

The Co component is one of the major components of the alloy and its content is the largest of all the components. As mentioned above, Co-based alloy materials have the advantages of having corrosion resistance and abrasion resistance comparable to or superior to those of Ni-based alloy materials.

The Al component is one of the impurities of the alloy and is not to be intentionally included in the alloy. However, the Al content of 0.5 mass % or less is acceptable as it does not have any serious negative influence on the mechanical properties of the Co-based alloy structure. When the Al content is over 0.5 mass %, coarse grains of an oxide or nitride (e.g. Al₂O₃ or AlN) are generated, which causes deterioration of the mechanical properties.

The O component is also one of the impurities of the alloy and is not to be intentionally included in the alloy. However, the O content of 0.04 mass % or less is acceptable as it does not have any serious negative influence on the mechanical properties of the Co-based alloy structure. When the O content is over 0.04 mass %, coarse grains of each oxide (e.g. titanium oxide, zirconium oxide, aluminum oxide, iron oxide, silicon oxide, etc.) are generated, which causes deterioration of the mechanical properties.

### [Method for Manufacturing Cobalt-based Alloy Structure]

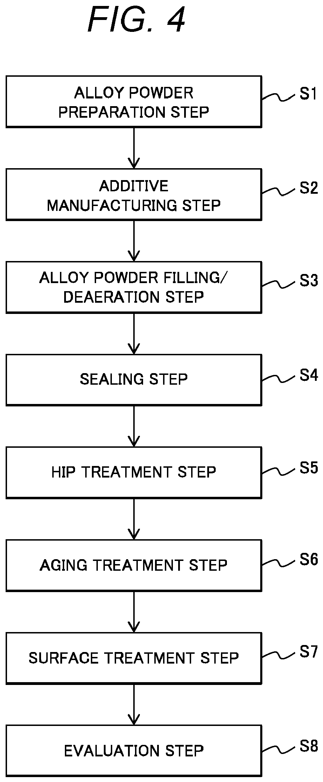

FIG. 4 is a flow diagram showing an exemplary process of a method for manufacturing the Co-based alloy structure (here, outer ring side end wall 4) according to an embodiment of the present disclosure. As shown in FIG. 4, the method roughly includes an alloy powder preparation step S1, an additive manufacturing step S2, an alloy powder filling/deaeration step S3, a sealing step S4, an HIP treatment step S5, an aging treatment step S6, a surface treatment step S7, and an evaluation step S8. Each step will be described hereinafter.

### (Alloy Powder Preparation Step)

The alloy powder preparation step S1 is a step of preparing an alloy powder to be used as a starting material for the Co-based alloy structure (hereinafter referred to as "starting material powder"). The starting material powder has a predetermined chemical composition according to the above-described chemical composition of the Co-based alloy powder. The starting material powder is prepared by, e.g., gas atomizing. Specifically, high frequency induction heating is performed on a sample in an inactive gas atmosphere after evacuation or in the atmosphere using a gas atomizer to melt the sample. Subsequently, a high-pressure gas (e.g., helium (He) gas, Ar gas, N₂ gas) is blown to the molten starting material to fabricate the starting material powder composed of substantially spherical particles with a size distribution within a range from 5 to 85 µm and in D90 within a range from 40 to 80 µm.

When the particle size is less than 5 µm, the fluidity of the alloy powder decreases (i.e., the formability of the alloy powder bed decreases) in the next step S2, which is a factor in poor shape accuracy of the AM article. In contrast, when the particle size is over 85 µm, it is difficult to control the local melting and rapid solidification of the alloy powder bed in the step S2, which leads to insufficient melting of the alloy powder and an increased surface roughness of the AM article. Meanwhile, the first and the second Co-based alloy powders do not necessarily have to be the same if they satisfy the above-mentioned chemical composition and the particle size distribution/range.

### (Additive Manufacturing Step)

The additive manufacturing step S2 is a step of forming an AM article with a desired shape (precursor of the first structure region 5) by selective laser melting (SLM) using the first Co-based alloy powder with a particle size distribution within a range from 5 to 85 µm and in D90 within a range from 40 to 80 µm prepared in the alloy powder preparation step S1.

In the additive manufacturing step S2, the first alloy powder fabricated in the former step S1 is spread to prepare an alloy powder bed with a predetermined thickness, and a predetermined region of the alloy powder bed is irradiated with a laser to locally melt the irradiated powder and rapidly solidify the molten region. This process is repeated to form an AM article (precursor of the first structure region 5). In the additive manufacturing step S2, the microstructure of the AM article is preferably controlled so that the finished structured article has a desirable microstructure.

### (Alloy Powder Filling/Deaeration Step)

The alloy powder filling/deaeration step S3 is a preparatory step for performing the HIP treatment step S5. Specifically, the second Co-based alloy powder prepared in the step S1 is filled into the hollow space 7 in the first structure region 5 through the vacuum drawing port 20. Upon completion of the filling of the second Co-based alloy powder, the filling status of the second Co-based alloy powder in the hollow space 7 is checked through the opening 9 using a predetermined tool. Subsequently, deaeration is performed using a predetermined deaerator through the vacuum drawing port 20. This deaeration is preferably performed for 2 hours or more under a pressure of 1.0 × 10⁻³ Pa or less at a temperature of 300 to 600°C. Meanwhile, the vacuum drawing port 20 may be formed of stainless steel instead of the Co-based alloy.

### (Sealing Step)

The sealing step S4 is also a preparatory step for performing the HIP treatment step S5. Specifically, after the completion of the step S3 described above, the opening 9 of the vacuum drawing port 20 is sealed by, e.g., pressure bonding or welding. The sealing material is preferably the same as the material of the vacuum drawing port 20.

### (HIP Treatment Step)

The HIP treatment S5 is a step of forming a precursor of the second structure region 10, densified by HIP, from the second Co-based alloy powder prepared in the alloy powder preparation step S1.

As a feature of the embodiment of the present disclosure, the second Co-based alloy powder used in the HIP treatment step S5 has the same particle size as that of the first Co-based alloy powder used in the additive manufacturing step S2 (size distribution within a range from 5 to 85 µm and in D90 within a range from 40 to 80 µm). The HIP treatment is preferably performed for 4 to 10 hours at a temperature of 1150°C under a pressure of 150 MPa. The cooling method after the HIP treatment is not particularly limited, and any one of, e.g., water cooling, oil cooling, air cooling, and furnace cooling may be performed.

The HIP treatment step S5 also serves as solution treatment for the AM article (precursor of the first structure region 5) obtained by the step S2. Specifically, the HIP treatment step S5 causes recrystallization of matrix crystal grains in the AM article (precursor of the first structure region 5), which relaxes the internal strain that has occurred in the rapid solidification.

### (Aging Treatment Step)

The aging treatment step S6 is a step of performing aging treatment on the precursor of the Co-based alloy structure after the HIP treatment step S5. The aging temperature is preferably set at 980°C. The holding time in the aging treatment S6 is preferably 4 to 10 hours. The cooling method in the aging treatment step S6 is not particularly limited, and any one of, e.g., water cooling, oil cooling, air cooling, and furnace cooling may be performed. In the aging treatment step S6, the aging treatment may be performed multiple times under different temperature conditions for different holding time periods.

### (Surface Treatment Step)

In the surface treatment step S7, the vacuum drawing port 20 is removed from the Co-based alloy structure (here, outer ring side end wall 4) obtained by the aging treatment step S6. At this stage, the Co-based alloy structure is deemed as a finished product. When appropriate, however, surface finishing treatment may be performed on the finished product, or a corrosion-resistant coating layer may be formed on the finished product.

### (Evaluation Step)

In the evaluation step S8, the Co-based alloy structure (here, outer ring side end wall 4) finally obtained is evaluated for its mechanical strength (e.g., 0.2% proof stress and tensile strength) using a predetermined evaluation apparatus. Specifically, in the evaluation step S8, the Co-based alloy structure finally obtained is determined as having a mechanical strength applicable to the turbine stator blade 1 when it has, e.g., the 0.2% proof strength at room temperature of 500 MPa or more and the tensile strength at 800°C of 300 MPa or more. The evaluation step S8 may be omitted from the method for fabricating a Co-based alloy structure.

### [Advantageous Effects of Embodiment]

In the present embodiment, additive manufacturing allows relatively easy formation of the first structure region 5 with a complex shape. Also, both in the step of forming the first structure region 5 by additive manufacturing (additive manufacturing step S2) and the step of forming the second structure region 10 by HIP (HIP treatment step S5), a Co-based alloy powder with a particle size distribution within a range from 5 to 85 µm and in D90 within a range from 40 to 80 µm is used. In other words, the alloy powder used to form the first structure region 5 and the alloy powder used to form the second structure region 10 have the major chemical composition and the particle size distribution in common.

This means that the metallographic structure of the first structure region 5 and that of the second structure region 10 tend to be homogeneous after the heat treatment is performed by HIP (after the step S5 above), which makes it unlikely for a boundary to appear between them. As a result, brittle fracture originating in the boundary between the first structure region 5 and the second structure region 10 is unlikely to occur, which maintains the integrity between the first and the second structure regions 5 and 10. This ensures that the Co-based alloy structure produced by the method according to the embodiment of the present disclosure (here, outer ring side end wall 4) not only has characteristics of Co-based alloys (e.g., corrosion resistance and abrasion resistance) but also surely has a sufficient mechanical strength. As such, by the method according to the embodiment of the present disclosure, there can be stably manufactured a Co-based alloy structure with a complex shape while securing a sufficient mechanical strength.

In addition, the use of first and second Co-based alloy powders with the chemical composition described above allows carbide phase particles, which contribute to precipitation strengthening, to precipitate dispersedly in the matrix crystal grains in the Co-based alloy structure. This further enhances the mechanical properties of the Co-based alloy structure.

Moreover, the Co-based alloy structure produced by the method according to the embodiment of the present disclosure (here, outer ring side end wall 4) can be used as the turbine stator blade 1 when it is configured to have the 0.2% proof stress at room temperature of 500 MPa or more and the tensile strength at 800°C of 300 MPa or more.

### [Other Embodiments]

So far, the outer ring side end wall 4 has been described as the Co-based alloy structure according to an embodiment of the present disclosure. However, the present disclosure is not limited thereto. Other embodiments include combustor components and tools for friction stir welding.

In addition, regarding the alloy powder preparation step S1 shown in FIG. 4, although gas atomizing is used as the method for preparing the starting material powder in the description above, the present disclosure is not limited thereto. In other words, in the alloy powder preparation step S1, any conventional method or technique may be employed. For example, a master alloy ingot fabrication sub-step of mixing, melting, and casting starting materials such that it has a desired chemical composition to fabricate a master alloy ingot and an atomizing sub-step of forming an alloy powder from the master alloy ingot may be performed. There are no particular limitations on the atomizing method, and any conventional method or technique may be employed. For example, instead of the above-described gas atomizing method, centrifugal force atomizing may be employed.

Moreover, it is preferable to carry out a step of recycling the first Co-based alloy powder as a separate step of preparing the second Co-based alloy powder (not shown in FIG. 4). The step of recycling the first Co-based alloy powder includes the substeps of: collecting the first Co-based alloy powder unused in the additive manufacturing step S2 for forming the first structure region; and classifying the collected first Co-based alloy powder so as to have the desired particle size distribution. By utilizing the recycled first Co-based alloy powder as at least a part of the second Co-based alloy powder, the alloy powder prepared in step S1 can be effectively utilized, and as a result, it can contribute to the reduction in cost for manufacturing the Co-based alloy structure as a whole.

While preferred embodiments of the present disclosure have been described, it should be noted that the present disclosure is not limited to the embodiments described above, and appropriate combinations and modifications can be implemented within the scope of the present disclosure.

### EXAMPLES

The present disclosure will be described in more detail hereinafter based on Sample A produced according to the steps described above (example) and Sample B (comparative example). The present disclosure is not to be construed as limited to the configuration of Sample A.

### [Fabrication of Sample A]

Sample A was produced by following the alloy powder preparation step, the additive manufacturing step, the alloy powder filling/deaeration step, the HIP treatment step, the aging step, and the evaluation step. In the production process of Sample A, the sealing step and the surface treatment step were omitted.

In the alloy powder preparation step, a Co-based alloy powder with a chemical composition satisfying the one described in the above embodiment was prepared. Specifically, Sample A had a chemical composition as follows. 0.15 ≤ C ≤ 0.2 mass %, 0.008 ≤ B ≤ 0.012 mass %, 24.5 ≤ Cr ≤ 25.5 mass %, 0 ≤ Fe ≤ 0.5 mass %, 9.5 ≤ Ni ≤ 10.5 mass %, 7.3 ≤ W ≤ 7.7 mass %, 0.1 ≤ Ti ≤ 0.4 mass %, 0.4 ≤ Zr ≤ 0.6 mass %, 0.2 ≤ Ta ≤ 0.4 mass %, 0.1 ≤ Nb ≤ 0.2 mass %, 0 ≤ Si ≤ 0.3 mass %, 0 ≤ A1 ≤ 0.15 mass %, N ≤ 0.03 mass %, and the balance consisting of Co and inevitable impurities.

The particle size distribution of the prepared Co-based alloy powder was measured using a laser diffraction/scattering particle size distribution analyzer (SYNC, purchased from MicrotracBEL Co., Ltd.). It was confirmed that the Co-based alloy powder had a particle size distribution within a range from 5 to 85 µm and in D90 within a range from 40 to 80 µm.

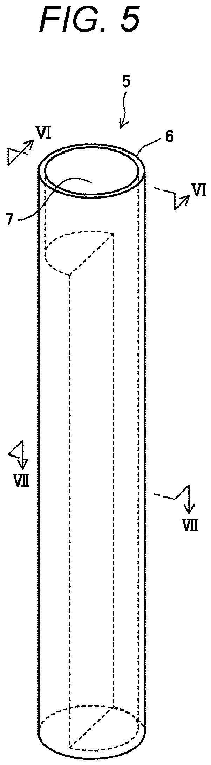

In the additive manufacturing step, the Co-based alloy powder described above was subjected to selective laser melting (SLM) to form the AM article shown in FIGs. 5 to 7 (first structure region).

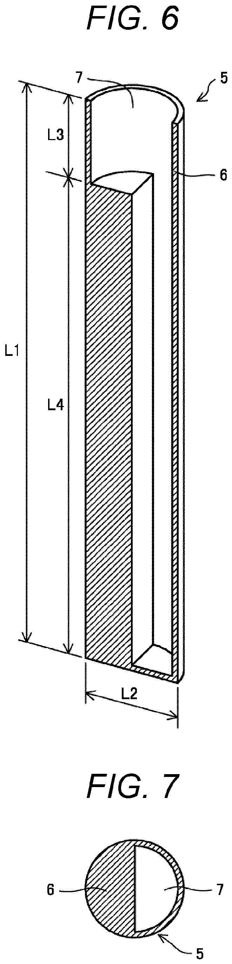

FIG. 5 is a schematic illustration showing a perspective view of the first structure region, in its entirety, to be applied for each of Sample A through Sample C; FIG. 6 is a schematic illustration showing a cross-sectional view of the first structure region taken along the line VI-VI in FIG. 5; and FIG. 7 is a schematic illustration showing a cross-sectional view of the first structure region taken along the line VII-VII in FIG. 5.

As shown in FIG. 5, the body of the first structure region was substantially cylindrical. As shown in FIGs. 6 and 7, the hollow space in the first structure region was configured to be circular in its upper portion and semicircular in the rest of the hollow space in a cross-sectional view. The dimensions of the first structure region shown in FIG. 6 were 75 mm in L1 (overall length of the cylinder), 12 mm in L2 (diameter of the cylinder), 15 mm in L3, and 60 mm in L4. In FIGs. 5 to 7, each element of the first structure region, the body, and the hollow space is provided with the same reference symbol as described in the above embodiment for convenience of illustration.

In the alloy powder filling/deaeration step, the Co-based alloy powder prepared in the alloy powder preparation step was filled into the hollow space in the first structure region. Upon completion of the filling, the filling status of the Co-based alloy powder was checked through the opening using a hammer. Subsequently, deaeration was performed through the opening for 3 hours under a pressure of 5.0 × 10⁻⁴ Pa or less at a temperature of 300°C.

In the HIP treatment step, the second structure region made from the Co-based alloy powder described above was formed by HIP in the hollow space of the first structure region. That is, the second Co-based alloy powder used in the HIP treatment is the same powder used in the additive manufacturing step, in which the powders have the same chemical composition and particle size (size distribution within a range from 5 to 85 µm and in D90 within a range from 40 to 80 µm). The HIP treatment was performed for 4 hours at a temperature of 1150°C under a pressure of 150 MPa. After the HIP treatment, the first and second structure regions were cooled by air cooling.

In the aging treatment step, the first and second structure regions were subjected to aging treatment for 4 hours at 980°C. Subsequently, the first and second structure regions were cooled by air cooling.

### [Fabrication of Samples B and C]

Samples B and C were produced by following the alloy powder preparation step, the additive manufacturing step, the alloy powder filling/deaeration step, the HIP treatment step, and the aging step. Detailed description of the conditions under which each step of producing Samples B and C was performed is omitted as they were similar to those with Sample A. As for the steps of producing Samples B and C, the points different from the case with Sample A will be described hereinafter.

In the alloy powder preparation step, the alloy composition of Sample B was an Fe-Ni alloy, which will be described later, and the alloy composition of Sample C was the same as that of Sample A. As for the particle size distribution/range of the powders, two kinds of the particle size distribution/range were fabricated in each of Samples B and C. One had a particle size distribution within a range from 5 to 85 µm and in D90 within a range from 40 to 80 µm, the other had a particle size distribution from 5 to 150 µm and in D90 within a range from 100 to 140 µm.

Sample B had a chemical composition as follows. B: 0.008 mass %, Cr: 18.3 mass %, Ni: 36.1 mass %, W: 5.0 mass %, Ti: 0.84 mass %, Zr: 0.016 mass %, Nb: 4.1 mass %, and the balance consisting of Fe and inevitable impurities.

In the additive manufacturing step, the AM article shown in FIGs. 5 to 7 (first structure region) was formed from the first alloy powder having the particle size distribution within a range from 5 to 85 µm and in D90 within a range from 40 to 80 µm.

In the HIP treatment step, the second structure region was formed from the second alloy powder having the particle size distribution within a range from 5 to 150 µm and in D90 within a range from 100 to 140 µm in the hollow space of the first structure region by HIP. In other words, the second alloy powder used in the HIP treatment had a particle size distribution/range different from that of the first alloy powder used in the additive manufacturing step.

### [Results of Analysis on Samples A to C]

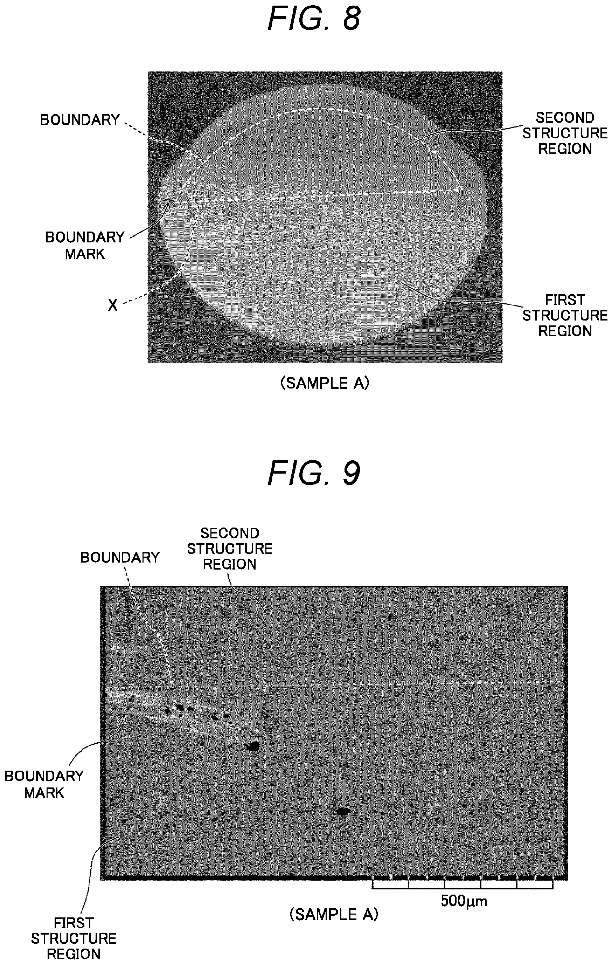

The state of the metallographic structure of each of the first structure region and the second structure region was analyzed for Samples A to C based on FIGs. 8 to 14. A boundary position between the first and the second structure regions was determined by visually observing the surface of each sample after polishing.

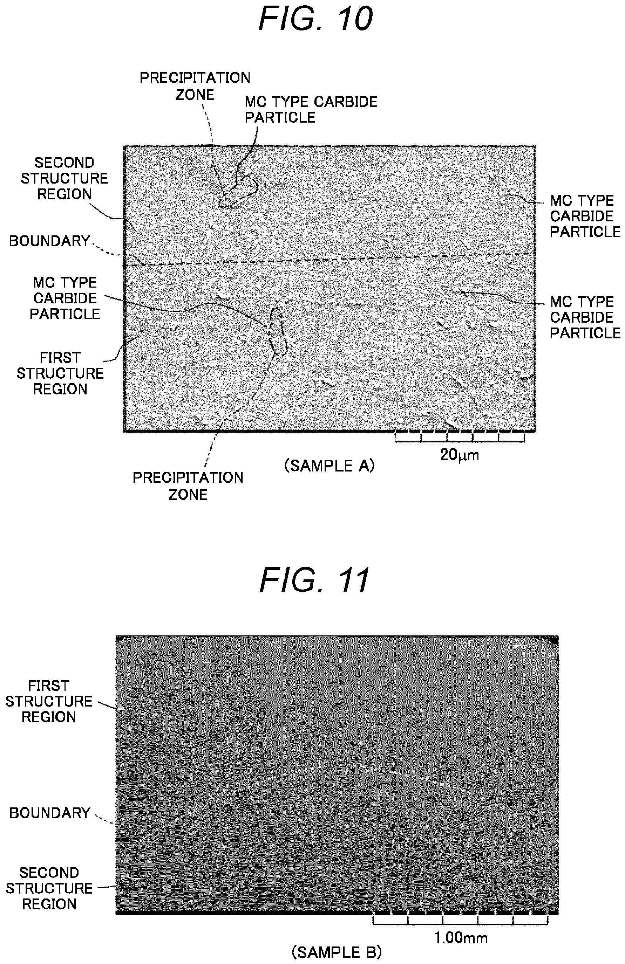

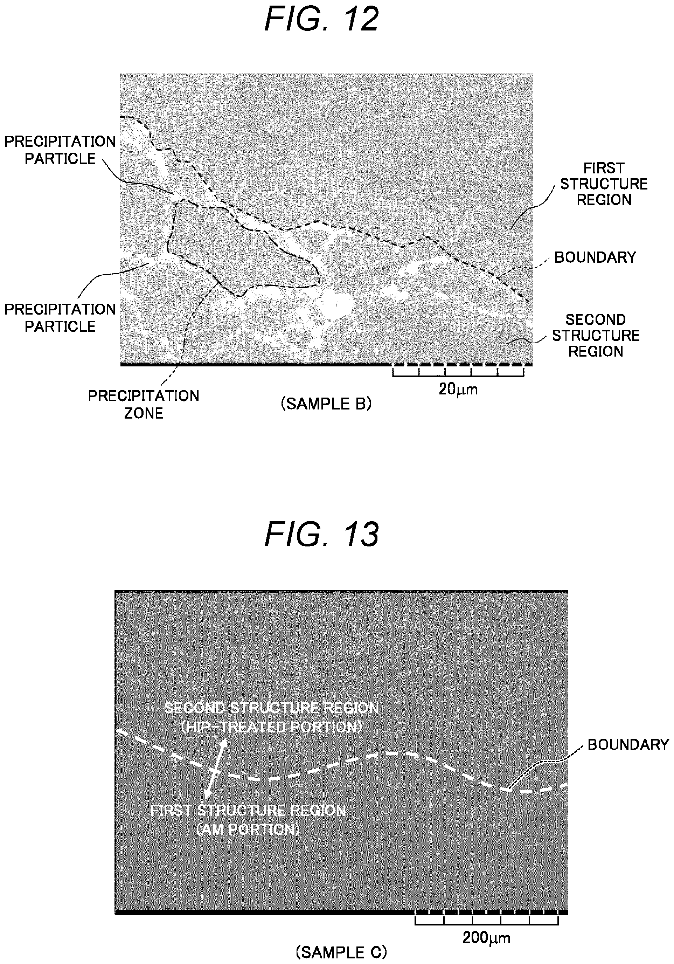

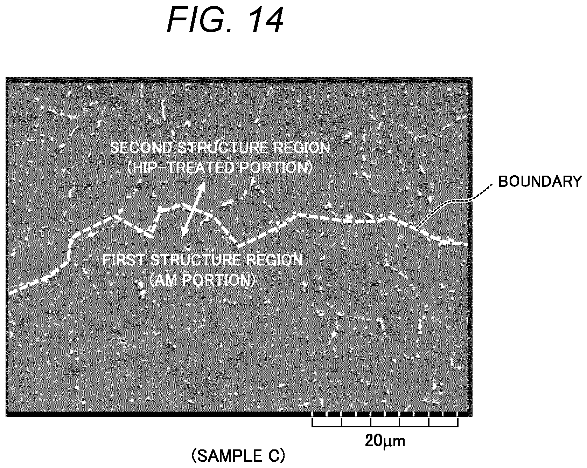

FIG. 8 is an optical microscopy photograph showing the upper surface of Sample A; FIG. 9 is a scanning electron microscopy photograph showing a metallographic structure of the portion X in FIG. 8; FIG. 10 is another scanning electron microcopy photograph showing a metallographic structure in an area in the vicinity of the boundary between the first structure region and the second structure region in Sample A; FIG. 11 is another scanning electron microscopy photograph showing a metallographic structure of Sample B; FIG. 12 is another scanning electron microscopy photograph showing a metallographic structure in an area in the vicinity of the boundary between the first structure region and the second structure region in Sample B; FIG. 13 is another scanning electron microscopy photograph showing a metallographic structure of Sample C; and FIG. 14 is another scanning electron microscopy photograph showing a metallographic structure in an area in the vicinity of the boundary between the first structure region and the second structure region in Sample C.

In FIGs. 8 and 9, the approximate boundary position between the first and the second structure regions on the upper surface of Sample A is indicated with a mark (boundary mark) using a tool with a sharp pointed end. Also, in FIGs. 8 to 10, the approximate boundary position of the metallographic structure between the first and the second structure regions in Sample A is indicated by a dashed line. Similarly, in FIGs. 11 to 14, the approximate boundary position of the metallographic structure between the first and the second structure regions in Samples B and C are indicated by a dashed line.

According to FIGs. 11 and 12, in Sample B, the metallographic structure of the first structure region and that of the second structure region are different from each other. In particular, it is observed that in the metallographic structure in the vicinity of the boundary between the first and the second structure regions, precipitation zones surrounded by precipitation particles have appeared in the second structure region, while no such precipitation zones have appeared in the first structure region. In other words, in Sample B, a tendency is observed for the metallographic structure of the first structure region and that of the second structure region to be inhomogeneous.

According to FIGs. 13 and 14, also in Sample C, the metallographic structure of the first structure region and that of the second structure region are different from each other. In particular, it is observed that in the metallographic structure in the vicinity of the boundary between the first and the second structure regions, precipitation zones surrounded by connecting a plurality of and continuative MC type carbide particles have appeared in the second structure region. In contrast, in the first structure region, it is confirmed that the precipitated MC type carbide particles were smaller than those in the second structure region, and the precipitation zones surrounded by the plurality of MC type carbide particles are also smaller than those in the second structure region. In other words, also in Sample C, a tendency is observed for the metallographic structure of the first structure region and that of the second structure region to be inhomogeneous.

As has been described above, in Samples B and C, the difference in particle size distribution/range between the first alloy powder used in the additive manufacturing step and the second alloy powder used in the HIP treatment step results in inhomogeneity between the metallographic structure of the first structure region and that of the second structure region. This would make brittle fracture likely to occur originating in the boundary between the first and the second structure regions. Therefore, a sufficient mechanical strength cannot be expected with Samples B and C. In fact, in the evaluation step above, Samples B and C were not confirmed to have a sufficient mechanical strength (0.2% proof stress at room temperature of 500 MPa or more; tensile strength at 800°C of 300 MPa or more).

In contrast, according to FIGs. 9 and 10, in Sample A, the metallographic structure of the first structure region and that of the second structure are similar. In particular, with referring to FIG. 10, it is observed that many precipitation zones surrounded by MC type carbide particles have appeared in both the metallographic structures in the vicinity of the boundary between the first and the second structure regions. In other words, in Sample A, the metallographic structure of the first structure region and that of the second structure region are homogeneous. Also, as shown in FIG. 8, no boundary of the metallographic structure is visually observable between the first and the second structure regions.

As has been described above, in Sample A, because the first Co-based alloy powder used in the additive manufacturing step and the second Co-based alloy powder used in the HIP treatment step have the particle size distribution/range in common, which is size distribution within a range from 5 to 85 µm and in D90 within a range from 40 to 80 µm, the metallographic structure of the first structure region and that of the second structure region are homogeneous. This makes it unlikely for a boundary of metallographic structure to appear between the first and the second structure regions.

As a result, in Sample A, brittle fracture is unlikely to occur originating in the boundary. Moreover, it is assumed that the many precipitation zones that have appeared equally in both the first and the second structure regions enhance the mechanical strength of Sample A as a whole. In fact, in the evaluation step above, it has been confirmed that Sample A exhibits a sufficient mechanical strength (0.2% proof stress at room temperature of 500 MPa or more, and tensile strength at 800°C of 300 MPa or more).

The present disclosure finds industrial applications as, for example, a method for producing a cobalt-based alloy structure suitable for a turbine stator blade as a turbine high-temperature component, and a turbine stator blade obtained by the method.

## Claims

1. A method for manufacturing a cobalt-based alloy structure, the cobalt-based alloy structure comprising a first structure region comprising a hollow space and a second structure region filled in the hollow space,
the method comprising the steps of:
forming the first structure region by additive manufacturing from a first cobalt-based alloy powder having a particle size distribution within a range from 5 to 85 µm and a volumetric basis 90% diameter within a range from 40 to 80 µm; and
forming the second structure region in the hollow space by hot isostatic pressing, the hollow space being filled with a second cobalt-based alloy powder having a particle size distribution within a range from 5 to 85 µm and a volumetric basis 90% diameter within a range from 40 to 80 µm.

2. The method according to claim 1,
wherein the first and the second cobalt-based alloy powder comprising:
0.08 mass % or more and 0.25 mass % or less of carbon;
0.1 mass % or less of boron;
10 mass % or more and 30 mass % or less of chromium;
5 mass % or less of iron, 30 mass % or less of nickel, the total content of the iron and the nickel being 30 mass % or less;
at least one of tungsten and molybdenum, the total content of the tungsten and the molybdenum being 5 mass % or more and 12 mass % or less;
at least one of titanium, zirconium, niobium, tantalum, hafnium and vanadium, the total content of the titanium, the zirconium, the niobium, the tantalum, the hafnium and the vanadium being 0.5 mass % or more and 2 mass % or less;
0.5 mass % or less of silicon;
0.5 mass % or less of manganese;
0.003 mass % or more and 0.1 mass % or less of nitrogen; and
the balance being cobalt and impurities.

3. The method according to claim 1 or 2, wherein
the method further comprises the step of recycling the first cobalt-based alloy powder, the step of recycling the first cobalt-based alloy powder comprising the substeps of:
collecting the first cobalt-based alloy powder unused in the step of forming the first structure region; and
classifying the first cobalt-based alloy powder collected into the predetermined particle size, and
wherein the second cobalt-based alloy powder comprises the first cobalt-based alloy powder recycled in the step of recycling the first cobalt-based alloy powder.

4. A cobalt-based alloy structure manufactured by the method according to any one of claims 1 to 3, wherein
a predetermined portion of the structure has a 0.2% proof stress at room temperature of 500 MPa or more and a tensile strength at 800°C of 300 MPa or more.

5. The cobalt-based alloy structure according to claim 4, wherein
the structure is a turbine stator blade, and
the portion is an outer ring side end wall.
